# EUROPEAN PATENT SPECIFICATION

(11) **EP 2 848 589 B1**
(45) Date of publication and mention of the grant of the patent: **18.04.2018**
(21) Application number: 13184471.4
(22) Date of filing: 14.09.2013
(51) Int. Cl.: C01G 23/00

(54) **Sonochemical synthesis of iron doped strontium titanate powder**
Sonochemische Synthese für eisendotiertes Strontiumtitanatpulver
Synthèse sonochimique de poudre de titanate de strontium dopée au fer

(43) Date of publication of application: 18.03.2015
(73) Proprietor: Honeywell Romania S.R.L., 014459 Bucharest (RO)
(72) Inventor: Cobianu, Cornel P., 061672 Bucharest (RO); Serban, Bogdan-Catalin, 60000 Bucharest (RO); Brezeanu, Mihai, 014459 Bucharest (RO); Buiu, Octavian, 023817 Bucharest (RO); Bostan, Cazimir G., 061724 Bucharest (RO)
(74) Representative: Houghton, Mark Phillip

(56) References cited:
- STEINSVIK<1> S ET AL: "Hydrogen ion conduction in iron-substituted strontium titanate, SrTi1-xFexO3-x/2 (0=<x=<0.8)", SOLID STATE IONICS, NORTH HOLLAND PUB. COMPANY. AMSTERDAM; NL, NL, vol. 143, no. 1, 1 June 2001 (2001-06-01), pages 103-116, XP004245338, ISSN: 0167-2738, DOI: 10.1016/S0167-2738(01)00838-4
- NERI G ET AL: "FeSrTiO3-based resistive oxygen sensors for application in diesel engines", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, CH, vol. 134, no. 2, 25 September 2008 (2008-09-25), pages 647-653, XP025429952, ISSN: 0925-4005, DOI: 10.1016/J.SNB.2008.06.007 [retrieved on 2008-06-17]
- DULOV E N ET AL: "Magnetic phase composition of strontium titanate implanted with iron ions", MATERIALS RESEARCH BULLETIN, ELSEVIER, KIDLINGTON, GB, vol. 46, no. 12, 25 August 2011 (2011-08-25), pages 2304-2307, XP028108189, ISSN: 0025-5408, DOI: 10.1016/J.MATERRESBULL.2011.08.057 [retrieved on 2011-09-03]
- MING XU ET AL: "Synthesis of Monosized Strontium Titanate Particles with Tailored Morphologies", JOURNAL OF THE AMERICAN CERAMIC SOCIETY, vol. 89, no. 12, 1 December 2006 (2006-12-01), pages 3631-3634, XP55097787, ISSN: 0002-7820, DOI: 10.1111/j.1551-2916.2006.01283.x
- WANQUAN JIANG ET AL: "The controllable synthesis of nanoporous SrTiO3 by an ultrasound irradiation approach;The controllable synthesis of nanoporous SrTiO3 by an ultrasound irradiation approach", SMART MATERIALS AND STRUCTURES, IOP PUBLISHING LTD., BRISTOL, GB, vol. 20, no. 6, 3 May 2011 (2011-05-03), page 65002, XP020205638, ISSN: 0964-1726, DOI: 10.1088/0964-1726/20/6/065002

## Description

### BACKGROUND

Oxygen detection via oxygen sensors has been widely applied in aerospace, domestic and industrial boilers, and automotive exhaust gas control systems. Iron doped strontium titanate can be used as an oxygen sensing material in oxygen sensors.

STEINSVIK ET AL: "Hydrogen ion conduction in iron-substituted strontium titanate, SrTi1-xFexO3-x/2 (O= x= 0.8)", SOLID STATE IONICS, NORTH HOLLAND PUB. COMPANY. AMSTERDAM; NL, NL, vol. 143, no. 1, 1 June 2001 (2001-06-01), pages 103-116, XP004245338 discloses; preparing SrTi₁₋ₓFexO_{3-x/2} by a liquid mix technique including grinding and calcining. NERI G ET AL: "FeSrTiO3-based resistive oxygen sensors for application in diesel engines", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, CH, vol. 134, no. 2, 25 September 2008 (2008-09-25), pages 647-653, XP025429952; discloses the preparation of SrTi_{0.4}Fe_{0.6}O_{2.8} powders by self-propagating high-temperature synthesis and their use in fabrication of a planar resistive oxygen sensor.
DULOV E N ET AL: "Magnetic phase composition of strontium titanate implanted with iron ions", MATERIALS RESEARCH BULLETIN, ELSEVIER, KIDLINGTON, GB, vol. 46, no. 12, 25 August 2011 (2011-08-25), pages 2304-2307, XP028108189; discloses synthesising thin magnetic films with implantation of iron ions into single-crystalline substrates of strontium titanate and analysis of magnetic effects.
MING XU ET AL: "Synthesis of Monosized Strontium Titanate Particles with Tailored Morphologies", JOURNAL OF THE AMERICAN CERAMIC SOCIETY, vol. 89, no. 12, 1 December 2006 (2006-12-01), pages 3631-3634, XP55097787; discloses preparation of mono size strontium titanate particles of various morphologies synthesised using ultrasound irradiation and their characterisation.
WANQUAN JIANG ET AL: "The controllable synthesis of nanoporous SrTiO3 by an ultrasound irradiation approach; The controllable synthesis of nanoporous SrTiO3 by an ultrasound irradiation approach", SMART MATERIALS AND STRUCTURES, IOP PUBLISHING LTD., BRISTOL, GB, vol. 20, no. 6,3 May 2011 (2011-05-03), page 65002, XP020205038; discloses the preparation of nano porous strontium titanate with controlled morphologies using ultrasound irradiation, the strontium titanate particles being synthesised by hydrolysis of strontium alkoxide.

### SUMMARY

The present invention in its various aspects is as set out in the appended claims. The present disclosure is directed toward iron doped strontium titanate powder that can be used for oxygen detection. In particular, the present disclosure is directed toward a method of sonochemical synthesis of iron doped strontium titanate powder. The method can include forming or obtaining a nanostructured iron doped strontium titanate powder from one of an alcohol based reaction solution and an aqueous reaction solution, the alcohol based reaction solution and the aqueous reaction solution comprising a plurality of precursors and a plurality of reagents, and applying a sonochemical treatment to the reaction solution for a time period.

### DETAILED DESCRIPTION OF THE DRAWINGS

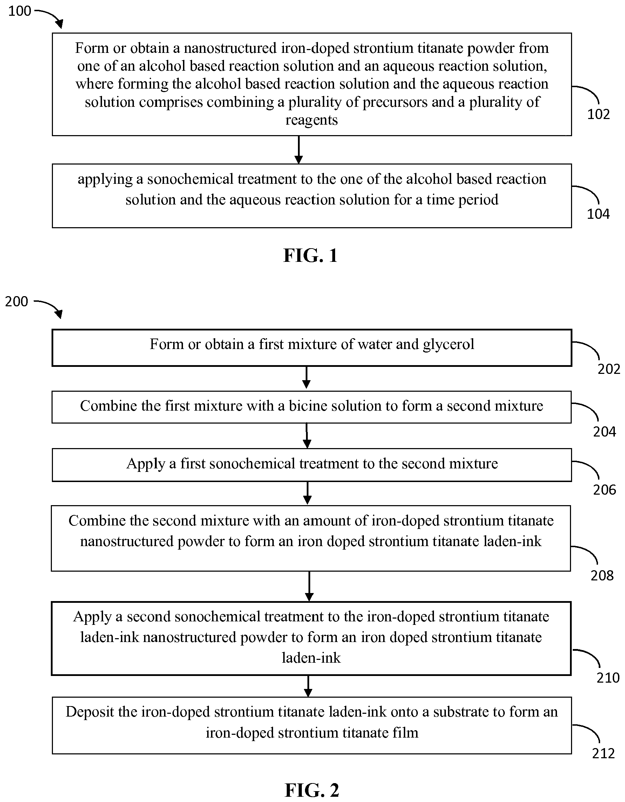

The embodiments of the present disclosure will be described, by way of example only, by reference to the FIGS. 1 and 2 of the accompanying drawings in which:
FIG. 1 shows a flow diagram for a method, in accordance with at least one example of the present disclosure.
FIG. 2 show a flow diagram for a method, in accordance with at least one example of the present disclosure.

### DETAILED DESCRIPTION

As discussed herein, the present disclosure is directed toward a method of sonochemical synthesis of nanostructured iron doped strontium titanate powder (also referred to herein as "iron doped strontium titanate powder"). The method of the present disclosure can provide iron doped strontium titanate powder by sonochemistry from one of an alcohol based reaction solution and an aqueous reaction solution. The present disclosure provides a method for forming iron doped strontium titanate powder films having increased porosity, surface area, and crystalline dimensionality, which can increase sensitivity and response of the iron doped strontium titanate powder films being used as an oxygen sensing material in oxygen sensors.

Iron doped strontium titanate can be an oxygen resistive sensor that can be used in various industries, for example, the automotive industry. Iron doped strontium titanate having the following chemical formula: SrTi₁₋ₓFeₓO_{3-d}, where x equals 0.3 to 0.6 can behave as a p-type semiconductor in an oxygen partial pressure range, above 10⁻¹⁰ bar, and has temperature independence of its electrical resistivity in the temperature range from 450°C to 650°C, for x=0.6. That is, the oxygen sensitivity and response time of iron doped strontium titanate is not substantially affected by temperatures in that temperature range.

In previous approaches, iron doped strontium titanate powder has been synthesized by using energy intensive methods. For example, iron doped strontium titanate powder has been synthesized in solid state reactions between titanium dioxide, strontium peroxide, and iron(III) oxide at temperatures of about 1200 °C, followed by ball milling of the resulting iron doped strontium titanate material to form the iron doped strontium titanate powder. The resulting iron doped strontium titanate powder can have a particle size of about 1.5 micrometers to about 5 micrometers. The iron doped strontium titanate powder can be subsequently mixed with organic binders containing terpineol and ethyl cellulose for obtaining an iron doped strontium titanate powder paste. The iron doped strontium titanate powder paste can be deposited by screen printing technology to form a film. For example, the method of forming the film can include sintering at temperatures above 1100 °C. In some examples, to further reduce the crystalline grain size to less than 100 nanometers, the method of forming the film can include sintering at a temperature of about 2300 °C. The previous approaches cannot control the microstructure of the film, as well as the surface area and porosity, which are parameters for achieving increased sensitivity and increased response time in oxygen sensors.

The methods of the present disclosure can provide a low energy (e.g., maximum processing temperature less than 800°C) and low cost method of forming iron- doped strontium titanate powder from one of an alcohol based reaction solution and an aqueous reaction solution using sonochemistry. The iron doped strontium titanate powder can be used to form an iron doped strontium titanate-powder film that can be used as an oxygen sensing material in oxygen sensors. The oxygen sensing material can have increased porosity and increased response time.

FIG. 1 shows a flow diagram for a method 100, in accordance with at least one example of the present disclosure. At step 102, method 100 can include forming or obtaining a nanostructured iron doped strontium titanate-powder from one of an alcohol based reaction solution and an aqueous reaction solution, where forming the alcohol based reaction solution and the aqueous reaction solution comprises combining a plurality of precursors and a plurality of reagents. In the present invention, the plurality of precursors are chosen from titanium isopropoxide (Ti(OC₃H₇₋ᵢₛₒ)₄), titanium nitrate, titanium tetrachloride, strontium acetate (Sr(C₂H₃O₂)₂), strontium nitrate, iron nitrate, strontium chloride, ferric isopropoxide, iron nitrate nonahydrate, iron(III) chloride, iron(III) isopropoxide (Fe(OC₃H₇₋ᵢₛₒ)₃), and iron(III) acetate. In forming the alcohol based reaction solution and the aqueous reaction solution, the stoichiometry ratio for Sr/Ti/Fe atoms of the nanostructured iron doped strontium titanate powder can be 1/0.4/0.6.

In the present invention, the plurality of reagents are chosen from acetic acid, sodium hydroxide, a triblock copolymer surfactant, lactic acid, 2-methoxyethanol (C₃H₈O₂), ethanol, and dimethylformamide. In an example, the triblock copolymer surfactant is poly(ethylene glycol)-block-(poly) propylene glycol-block-poly ethylene glycol (PO₂₀EO₇₀PO₂₀). The triblock copolymer surfactant can affect the hierarchical structuring of the iron doped strontium titanate powder. The water and acetic acid can provide dissolution and hydrolysis of the plurality of precursors and their stoichiometric reaction.

At step 104, the method 100 includes applying a sonochemical treatment to the one of the alcohol based reaction solution and the aqueous reaction solution for a time period. Applying the sonochemical treatment requires a high intensity ultrasonic radiation for at least 2 hours. Sonochemistry is a synthesis method, where the chemical reactions are developed in the presence of high intensity ultrasound waves, which are irradiating to the solution. As a result of these ultrasound waves, that are propagating in the liquid, a periodic increase an decrease of the pressure in the liquid occurs, and gas bubbles appear in the liquid. The bubbles can initially grow by the energy received from the ultrasound waves, but at a certain point they no longer receive the energy and the bubbles implode. The implosion of bubbles in liquids can produce enormous amounts of energy from the conversion of kinetic energy of the liquid motion into heating the contents of the bubble. Due to the implosion of the gas bubbles, the chemical reactions, mass transport, and the hierarchical (nano) structuring processes are all enhanced. Sonochemical sol-gel synthesis can consist of a sequence of cavitation (e.g., the formation, growth, and implosive collapse of bubbles irradiated with sound) enhanced chemical reactions like dissolution, hydrolysis, and polycondensation.

In an example, the method 100 can include forming or obtaining the nanostructured iron doped strontium titanate powder from the alcohol based reaction solution, where the plurality of precursors includes titanium isopropoxide, iron isopropoxide, and strontium acetate and the plurality of reagents include 2-methoxyethanol, acetic acid, and a triblock copolymer surfactant. In an example, the method 100 can include forming or obtaining the nanostructured iron doped strontium titanate powder from the aqueous based reaction solution, where the plurality of precursors include strontium nitrate, iron nitrate nonahydrate, and titanium isopropoxide and the plurality of reagents include acetic acid, sodium hydroxide, and a triblock copolymer surfactant.

In an example, the method 100 can include forming or obtaining the nanostructured iron doped strontium titanate powder from the aqueous based reaction solution, where the plurality of precursors include strontium acetate, iron nitrate nonahydrate, and titanium isopropoxide and the plurality of reagents include acetic acid, lactic acid, and a triblock copolymer surfactant. In an example, the method 100 can include forming or obtaining the nanostructured iron doped strontium titanate powder from the aqueous based reaction solution, where the plurality of precursors include strontium acetate, ferric isopropoxide, and titanium isopropoxide and the plurality of reagents include 2-methoxyethanol, acetic acid, and a triblock copolymer surfactant.

In an example, the method 100 can include forming or obtaining the nanostructured iron doped strontium titanate powder from the aqueous based reaction solution, where the plurality of precursors include strontium nitrate, titanium nitrate, and iron nitrate and the plurality of reagents include 2-methoxyethanol, sodium hydroxide, and a triblock copolymer surfactant. In an example, the method 100 can include forming or obtaining the nanostructured iron doped strontium titanate powder from the aqueous based reaction solution, where the plurality of precursors include strontium acetate, titanium isopropoxide, and iron(III) acetate and the plurality of reagents include acetic acid, ethanol, and dimethylformamide.

In an example, the method 100 can include forming or obtaining the nanostructured iron doped strontium titanate powder from the aqueous based reaction solution, where the plurality of precursors include strontium nitrate, titanium isopropoxide, and iron(III) acetate and the plurality of reagents include ethanol, sodium hydroxide, and a triblock copolymer surfactant. In an example, the method 100 can include forming or obtaining the nanostructured iron doped strontium titanate powder from the aqueous based reaction solution, where the plurality of precursors include strontium chloride, titanium tetrachloride, and iron(III) chloride and the plurality of reagents include sodium hydroxide and a triblock copolymer surfactant.

In an example, the method 100 can include separating the nanostructured iron doped strontium titanate powder from the one of the alcohol based reaction solution and the aqueous reaction solution. In an example, separating can be done by centrifuging the one of the alcohol based reaction solution and the aqueous reaction solution. In an example, the method 100 can include washing the separated nanostructured iron doped strontium titanate powder in deionized water.

FIG. 2 shows a flow diagram for a method 200, in accordance with at least one example of the present disclosure. The method 200 can include forming a nanostructured iron doped strontium titanate film using the nanostructured iron doped strontium titanate powder formed from the method 100, discussed herein. At step 202, the method 200 can include forming or obtaining a first mixture of water and glycerol. In an example, the first mixture can include water within a range of about 40% w/w to about 60% w/w, based on a total weight of the first mixture. In an example, the first mixture can include glycerol within a range of about 60% w/w to about 40% w/w, based on a total weight of the first mixture. In one example, the first mixture includes 50% w/w glycerol. The method can include stirring or mixing the first mixture for a time period, for example, about 15 minutes. Other time periods can be used.

At step 204, the method 200 can include combining the first mixture with a bicine solution to form a second mixture. The bicine solution can include bicine within a range of about 0.8% w/w about 1.2% w/w, based on a total weight of the bicine solution. In an example, the bicine solution includes 1% w/w of bicine. At step 206, the method 200 can include applying a first sonochemical treatment to the second mixture. For example, during the first sonochemical treatment, an ultrasonic power intensity of less than 200 W/cm² can be applied for a time period such as 15 minutes, but other time periods can be used.

At step 208, the method 200 can include combining the second mixture with an amount of the nanostructured iron doped strontium titanate powder to form an iron doped strontium titanate laden-ink. For example, an amount of the nanostructured iron doped strontium titanate powder formed form the method 100 can be combined with the second mixture. In an example, the iron doped strontium titanate laden-ink can include the nanostructured iron doped strontium titanate powder within a range of from about 0.8% w/w to about 1.2% w/w, based on a total weigh of the iron doped strontium titanate laden-ink. In an example, the iron doped strontium titanate laden-ink can include 1 % w/w of the nanostructured iron doped strontium titanate powder.

At step 210, the method 200 can include applying a second sonochemical treatment to the the iron doped strontium titanate laden-ink. For example, the second sonochemical treatment can be applied for a time period such as 15 minutes, but other time periods can be used. For example, during the second sonochemical treatment, an ultrasonic power intensity of less than 200 W/cm² can be applied for the time period.

At step 212, the method 200 can include depositing the iron doped strontium titanate laden-ink onto a substrate to form an iron doped strontium titanate film. For example, the substrate can be chosen from a micro-hotplate and ceramic substrate. Step 212 can be repeated until a desired thickness of the iron doped strontium titanate film is reached. The method 200 can include thermal annealing (e.g., annealing) of the iron doped strontium titanate film. Annealing can include drying the iron doped strontium titanate film at a first temperature. For example, the method 200 can include drying the iron doped strontium titanate film at a temperature within a range of about 200°C to about 400°C, in an atmosphere of air. In an example, the temperature can be 200 °C. Annealing can include firing the iron doped strontium titanate film at a second temperature for thermal consolidation, where the second temperature greater than the first temperature. For example, the method 200 can include firing the dried iron doped strontium titanate film at a temperature of about 600 °C to remove water and any organic ligands.

### Examples

The following examples are given to illustrate, but not limit, the scope of this disclosure.

### Materials

Precursor: Titanium isopropoxide (Ti(OC₃H₇₋ᵢₛₒ)₄; molar mass = 284,215 g/mol)
Precursor: Titanium nitrate (TiNO₃)₄; molar mass (anhydrous) = 299.931 g/mol; molar mass (tetrahydrate) = 371.99 g/mol)
Precursor: Ttitanium tetrachloride (TiCl₂; molar mass = 189.67 g/mol)
Precucsor: Strontium acetate (Sr(C₂H₃O₂)₂; 3% w/w water; molar mass = 205.7 g/mol not considering water)
Precursor: Strontium nitrate (Sr(NO₃)₃; molar mass (anhydrous) = 211.63 g/mol; molar mass (tetrahydrate) = 283.69 g/mol)
Precursor: Iron nitrate (Fe(NO₃)₃; molar mass = 241.86 g/mol)
Precursor: Strontium chloride (SrCl₂; molar mass = 158.53 g/mol (Anhydrous))
Precursor: Iron nitrate (Fe(NO₃)₃; molar mass (nonahydrate) = 403.99 g/mol; molar mass (anhydrous) = 241.89 g/mol; molar mass (hexahydrate) = 403.99 g/mol)
Precursor: Iron(III) chloride (FeCl₃; molar mass = 162.2 g/mol)
Precursor: Iron(III) isopropoxide (Fe(OC₃H₇₋ᵢₛₒ)₃; molar mass = 233.11 g/mol)
Precursor: Iron(III) acetate (C₁₄H₂₇Fe₃O₁₈; molar mass t = 650.9 g/mol)
Reagent: Acetic acid, (C₂H₄O₂; molar mass = 60.05 g/mol)
Reagent: Sodium hydroxide (NaOH; molar mass = 39.99 g/mol)
Reagent: Poly(ethylene glycol)-block-(poly) propylene glycol-block-poly Ethylene glycol (PO₂₀EO₇₀PO₂₀; molar mass = 5800 g/mol; P123; available from Signa-Aldrich Corporation)
Reagent: Lactic acid (C₃H₆O₃; molar mass = 90.06 g/mol)
Reagent: 2-methoxyethanol (C₃H₈O₂; molar mass = 76.09 g/mol)
Reagent: Ethanol (C₂H₅OH; molar mass = 46.07 g/mol)
Reagent: Dimethylformamide (C₃H₇NO; molar mass = 73.09 g/mol)

### Equipment

High-intensity ultrasonic probe: UIS250V, 25KHz, available from Hielscher Ultrasonic GMBH

### Example 1: Formation of iron doped strontium titanate powder using titanium isopropoxide, iron isopropoxide, and strontium acetate

Titanium isopropoxide (0.4 moles) is dissolved in 2-methoxyethanol (8 moles) to form a first mixture. Resulting propy alcohol (C₃H₇OH) and remaining 2-methoxyethanol of the first mixture are distilled off under dry nitrogen. Iron isopropoxide (0.6 moles) is dissolved in 2-methoxyethanol (8 moles) to form a second mixture. Resulting propy alcohol and remaining 2-methoxyethanol of the second mixture are distilled off under dry nitrogen. Strontium acetate (1 mole) is added to 2-methoxyethanol (8 moles) to form a third mixture. The remaining 2-methoxyethanol of the third mixture is distilled off under dry nitrogen.

The three mixtures are combined and boiled (greater than 120 °C) to form a 1 M intermediate solution. The triblock copolymer surfactant (0.0155 moles), acetic acid (0.5 moles), and 2-methoxyethanol (12 moles) are combined to form 1 liter of a catalyzed solvent. The intermediate solution (1 liter) was added drop-wise to the catalyzed solvent to form an alcohol based reaction solution, while applying a sonochemical treatment to the catalyzed solvent. The sonochemical treatment continued for about 2 hours to form 0.25 Molar iron doped strontium titanate powder (e.g., STFO60). The resulting iron doped strontium titanate powder was collected by centrifugation, washed with deionized water and drying at 120 °C in air, and fired at 400 °C in air for 1 hour. Smaller amounts of STFO60 powders can be obtained by scaling down quantities from above with preserving the targeted stoichiometry of the STFO (Sr/Ti/Fe=1/0.4/0.6).

### Example 2: Formation of iron doped strontium titanate powder using strontium nitrate, iron nitrate nonahydrate, and titanium isopropoxide

Strontium nitrate (0.636 grams (g)) is mixed with iron nitrate nonahydrate (0.7272 grams; Fe(NO3)₃ * 9 H₂O) to form a first mixture. Titanium isopropoxide (0.3408 g) is mixed with acetic acid (0.72 g) to form a second mixture. The titanium isopropoxide reacts with the acetic acid to give titanium isopropoxide monoacetate (Ti(CH₂COO)(OC₃H₇)₃), which is then dissolved in water to obtain Ti(CH₃COO)ₓ(OH)₄₋ₓ. As discussed herein, molar ratios selected for synthesis of iron doped strontium titanate powder with molar ratio of ions as follows: Sr/Ti/Fe=1/0.4/0.6.

The first and second mixtures are combined and water (5.18 g) is added to form an intermediate solution. The intermediate solution is added to 20 ml of 4M sodium hydroxide (4.8 grams in 30 ml of solution of water and sodium hydroxide) to form the aqueous reaction solution, while applying a sonochemical treatment to the aqueous reaction solution. The sonochemical treatment was applied for 2 hours at 20 °C. Optionally, the 2M sodium hydroxide solution can include 0.1 g of the triblock copolymer surfactant. The resulting iron doped strontium titanate powder was collected by centrifugation, washed with deionized water and drying at 120 °C in air, and fired at 400 °C in air for 1 hour.

### Example 3: Formation of iron doped strontium titanate powder using strontium acetate, iron nitrate nonahydrate, and titanium isopropoxide

Appropriate amounts of strontium acetate are mixed with iron nitrate nonahydrate to form a first mixture. Appropriate amounts of titanium isopropoxide and acetic acid are mixed to form a second solution including titanium isopropoxide nonoacetate. As discussed herein, the appropriate amounts selected provide for an iron doped strontium titanate powder with molar ratio of ions as follows: Sr/Ti/Fe=1/0.4/0.6.

The first and second mixtures are combined to form an intermediate solution. The intermediate solution is added to a third mixture of water, latic acid, and the triblock copolymer to form the aqueous reaction solution, while applying a sonochemical treatment to the aqueous reaction solution. The sonochemical treatment was applied for 2 hours at 20 °C. The resulting iron doped strontium titanate powder was collected by centrifugation, washed with deionized water and drying at 120 °C in air, and fired at 400 °C in air for 1 hour.

### Example 4: Formation of iron doped strontium titanate powder using strontium acetate, ferric isopropoxide, and titanium isopropoxide

Appropriate amounts of strontium nitrate is mixed with acetic acid and heated to about 60°C 80°C to form a first mixture. An appropriate amount of titanium isopropoxide is mixed with ferric isopropoxide to form a second mixture. As discussed herein, the appropriate amounts selected provide for an iron doped strontium titanate powder with molar ratio of ions as follows: Sr/Ti/Fe=1/0.4/0.6.

The first and second mixtures are combined to form an intermediate solution. The intermediate solution is added to a third mixture of water, the triblock copolymer, and 2-methoxyethanol to form the aqueous reaction solution, while applying a sonochemical treatment to the aqueous reaction solution. The sonochemical treatment was applied for 2 hours at 20 °C. The resulting iron doped strontium titanate powder was collected by centrifugation, washed with deionized water and drying at 120 °C in air, and fired at 400 °C in air for 1 hour.

### Example 5: Formation of iron doped strontium titanate powder using strontium nitrate, titanium nitrate, and iron nitrate

Appropriate amounts of strontium nitrate, iron nitrate, and titanium nitrate are combined to form an intermediate solution, as per desired stoichiometry, similarly as above. A first mixture of water, the triblock copolymer surfactant, and 2-methoxyethanol is added drop-wise to the intermediate solution to form a second mixture. The second mixture is added to 20 ml of 4M sodium hydroxide to form the aqueous reaction solution and stirred for about 10 minutes. A sonochemical treatment is applied to the aqueous reaction solution. The sonochemical treatment was applied for 2 hours at 20 °C. The resulting iron doped strontium titanate powder was collected by centrifugation, washed with deionized water and drying at 120 °C in air, and fired at 400 °C in air for 1 hour.

### Example 6: Formation of iron doped strontium titanate powder using strontium acetate, titanium isopropoxide, and iron(III) acetate

Appropriate amounts of titanium isopropoxide and acetic acid are combined to form a first mixture including titanium isopropoxide monoacetate. An appropriate amount of iron(III) acetate is dissolved in ethanol to form a second mixture. An appropriate amount of strontium acetate is added to the second mixture. The first and second mixtures are combined to form an intermediate solution. Dimethylformamide and water are added to the intermediate solution to form an aqueous reaction solution. A sonochemical treatment is applied to the aqueous reaction solution. The sonochemical treatment was applied for 2 hours at 20 °C. The resulting iron doped strontium titanate powder was collected by centrifugation, washed with deionized water and drying at 120 °C in air, and fired at 400 °C in air for 1 hour.

As discussed herein, the appropriate amounts selected provide for an iron doped strontium titanate powder with molar ratio of ions as follows: Sr/Ti/Fe=1/0.4/0.6.

### Example 7: Formation of iron doped strontium titanate powder using strontium nitrate, titanium isopropoxide, and iron(III) acetate

Appropriate amounts of titanium isopropoxide and acetic acid are combined to form a first mixture including titanium isopropoxide monoacetate. An appropriate amount of strontium nitrate is mixed with the first mixture to form a second mixture. An appropriate amount of iron(III) acetate is dissolved in ethanol to form a third mixture. The second and third mixtures are combined to form an intermediate solution. Water is added to the intermediate solution. NaOH (4M) aqueous solution is added to the intermediate solution to form an aqueous reaction solution. A sonochemical treatment is applied to the aqueous reaction solution. The sonochemical treatment was applied for 2 hours at 20 °C. The resulting iron doped strontium titanate powder was collected by centrifugation, washed with deionized water and drying at 120 °C in air, and fired at 400 °C in air for 1 hour.

As discussed herein, the appropriate amounts selected provide for an iron doped strontium titanate powder with molar ratio of ions as follows: Sr/Ti/Fe=1/0.4/0.6.

### Example 8: Formation of iron doped strontium titanate powder using strontium chloride, titanium tetrachloride, and iron(III) chloride

An appropriate amount of titanium tetrachloride is combined with water to form a first mixture including titanium oxychloride. The titanium oxychloride is combined with NaOH (4M) aqueous solution to form a second mixture including titanium hydroxide. Strontium chloride and iron(III) chloride are added drop-wise to the second mixture to form an aqueous reaction solution. The Sr/Ti/Fe ion molar ration are 1/1-x/x, where x=0.6. A sonochemical treatment is applied to the aqueous reaction solution. The sonochemical treatment was applied for 2 hours at 20 °C. The resulting iron doped strontium titanate powder was collected by centrifugation, washed with deionized water and drying at 120 °C in air, and fired at 400 °C in air for 1 hour.

### Additional Notes & Examples

Examples of the present disclosure provide oxygen resistive sensors that have a long life and are free from lead.

In Example 1, includes subject matter directed to a method. The method can include forming or obtaining a nanostructured iron doped strontium titanate powder from one of an alcohol based reaction solution and an aqueous reaction solution, wherein forming the alcohol based reaction solution and the aqueous reaction solution comprises combining a plurality of precursors and a plurality of reagents, and applying a sonochemical treatment to the one of the alcohol based reaction solution and the aqueous reaction solution for a time period.

In Example 2, the subject matter of Example 1 can be optionally configured such that the plurality of precursors are chosen from titanium isopropoxide, titanium nitrate, titanium tetrachloride, strontium acetate, strontium nitrate, iron nitrate, strontium chloride, ferric isopropoxide, iron nitrate nonahydrate , iron(III) chloride, iron(III) isopropoxide, and iron(III) acetate.

In Example 3, the subject matter of any one or any combination of Examples 2 or 3 is optionally configured such that the plurality of reagents are chosen from acetic acid, sodium hydroxide, a triblock copolymer surfactant, lactic acid, 2-methoxyethanol, ethanol, and dimethylformamide.

In Example 4, the subject matter of any one or any combination of Examples 1 through 3 is optionally configured to include forming or obtaining the nanostructured iron doped strontium titanate powder from the alcohol based reaction solution, wherein the plurality of precursors include titanium isopropoxide, iron isopropoxide, and strontium acetate and the plurality of reagents include 2-methoxyethanol, acetic acid, and a triblock copolymer surfactant.

In Example 5, the subject matter of any one or any combination of Examples 1 through 4 is optionally configured to include forming or obtaining the nanostructured iron doped strontium titanate powder from the aqueous based reaction solution, wherein the plurality of precursors include strontium nitrate, iron nitrate nonahydrate, and titanium isopropoxide and the plurality of reagents include acetic acid, sodium hydroxide, and a triblock copolymer surfactant.

In Example 6, the subject matter of any one or any combination of Examples 1 through 5 is optionally configured to include forming or obtaining the nanostructured iron doped strontium titanate powder from the aqueous based reaction solution, wherein the plurality of precursors include strontium acetate, iron nitrate nonahydrate, and titanium isopropoxide and the plurality of reagents include acetic acid, lactic acid, and a triblock copolymer surfactant.

In Example 7, the subject matter of any one or any combination of Examples 1 through 6 is optionally configured to include forming or obtaining the nanostructured iron doped strontium titanate powder from the aqueous based reaction solution, wherein the plurality of precursors include strontium acetate, ferric isopropoxide, and titanium isopropoxide and the plurality of reagents include 2-methoxyethanol, acetic acid, and a triblock copolymer surfactant.

In Example 8, the subject matter of any one or any combination of Examples 1 through 7 is optionally configured to include comprising forming or obtaining the nanostructured iron doped strontium titanate powder from the aqueous based reaction solution, wherein the plurality of precursors include strontium nitrate, titanium nitrate, and iron nitrate and the plurality of reagents include 2-methoxyethanol, sodium hydroxide, and a triblock copolymer surfactant.

In Example 9, the subject matter of any one or any combination of Examples 1 through 8 is optionally configured to include comprising forming or obtaining the nanostructured iron doped strontium titanate powder from the aqueous based reaction solution, wherein the plurality of precursors include strontium acetate, titanium isopropoxide, and iron(III) acetate and the plurality of reagents include acetic acid, ethanol, and dimethylformamide.

In Example 10, the subject matter of Examples 1 through 9 is optionally configured to include comprising forming or obtaining the nanostructured iron doped strontium titanate powder from the aqueous based reaction solution, wherein the plurality of precursors include strontium nitrate, titanium isopropoxide, and iron(III) acetate and the plurality of reagents include ethanol, sodium hydroxide, and a triblock copolymer surfactant.

In Example 11, the subject matter of any one or any combination of Examples 1 through 10 is optionally configured to include forming or obtaining the nanostructured iron doped strontium titanate powder from the aqueous based reaction solution, wherein the plurality of precursors include strontium chloride, titanium tetrachloride, and iron(III) chloride and the plurality of reagents include sodium hydroxide and a triblock copolymer surfactant.

In Example 12, a method of forming an oxygen sensing layer can include sonicating a mixture including carbon nanostructures and a metal-oxide in an ultrasonical bath for a time period, and depositing the mixture onto a top surface of a substrate.

In Example 13, the subject matter of any one or any combination of Examples 1 through 10 is optionally configured to include comprising separating the nanostructured iron doped strontium titanate powder from the one of the alcohol based reaction solution and the aqueous reaction solution.

In Example 14, the subject matter of any one or any combination of Examples 1 through 13 is optionally configured to include applying the sonochemical treatment comprises a high intensity ultrasonic radiation for at least 2 hours.

In Example 15, includes subject matter directed toward a method. The method can include forming or obtaining a first mixture of water and glycerol, combining the first mixture with a bicine solution to form a second mixture, applying a first sonochemical treatment to the second mixture, combining the second mixture with an amount of nanostructured iron doped strontium titanate powder to form an iron doped strontium titanate laden-ink, applying a second sonochemical treatment to the iron doped strontium titanate laden-ink; and depositing the iron doped strontium titanate laden-ink onto a substrate to form an iron doped strontium titanate film.

In Example 16, the subject matter of any one or any combination of Examples 1 through 15 is optionally configured to include annealing of the iron doped strontium titanate film in air, including drying the iron doped strontium titanate film at a first temperature, and firing the iron doped strontium titanate film at a second temperature for thermal consolidation, the second temperature greater than the first temperature.

These non-limiting examples can be combined in any permutation or combination. The above Detailed Description is intended to be illustrative, and not restrictive. For example, the above-described examples (or one or more elements thereof) can be used in combination with each other. Other embodiments can be used, such as by one of ordinary skill in the art upon reviewing the above description. Also, various features or elements can be grouped together to streamline the disclosure. This should not be interpreted as intending that an unclaimed disclosed feature is essential to any claim. Rather, inventive subject matter can lie in less than all features of a particular disclosed embodiment. Thus, the following claims are hereby incorporated into the Detailed Description, with each claim standing on its own as a separate embodiment. The scope of the invention should be determined with reference to the appended claims, along with the full scope of equivalents to which such claims are entitled.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1 % to about 5%" should be interpreted to include not just 0.1% to 5%, inclusive, but also the individual values (e.g., 1%, 2%, 3%, and 4%) and the sub-ranges (e.g., 0.1% to 0.5%, 1.1% to 2.2%, 3.3% to 4.4%) within the indicated range. As used herein, the term "about" can be defined to include a margin of error, for example, at least +/- 10%.

## Claims

1. A method, comprising:
forming or obtaining a nanostructured iron doped strontium titanate powder from one of an alcohol based reaction solution and an aqueous reaction solution, wherein forming the alcohol based reaction solution and the aqueous reaction solution comprises combining a plurality of precursors and a plurality of reagents, wherein the plurality of precursors are chosen from titanium isopropoxide, titanium nitrate, titanium tetrachloride, strontium acetate, strontium nitrate, iron nitrate, strontium chloride, ferric isopropoxide, iron nitrate nonahydrate , iron(III) chloride, iron(III) isopropoxide, and iron(III) acetate and the plurality of reagents are chosen from acetic acid, sodium hydroxide, a triblock copolymer surfactant, lactic acid, 2-methoxyethanol, ethanol, and dimethylformamide ; and
applying a sonochemical treatment to the one of the alcohol based reaction solution and the aqueous reaction solution for a time period,wherein applying the sonochemical treatment comprises a high intensity ultrasonic radiation for at least 2 hours.

2. The method of claim 1, comprising forming or obtaining the nanostructured iron doped strontium titanate powder from the alcohol based reaction solution, wherein the plurality of precursors include titanium isopropoxide, iron isopropoxide, and strontium acetate and the plurality of reagents include 2-methoxyethanol, acetic acid, and a triblock copolymer surfactant.

3. The method of claim 1, comprising forming or obtaining the nanostructured iron doped strontium titanate powder from the aqueous based reaction solution, wherein the plurality of precursors include strontium nitrate, iron nitrate nonahydrate, and titanium isopropoxide and the plurality of reagents include acetic acid, sodium hydroxide, and a triblock copolymer surfactant.

4. The method of claim 1, comprising forming or obtaining the nanostructured iron doped strontium titanate powder from the aqueous based reaction solution, wherein the plurality of precursors include strontium acetate, iron nitrate nonahydrate, and titanium isopropoxide and the plurality of reagents include acetic acid, lactic acid, and a triblock copolymer surfactant.

5. The method of claim 1, comprising forming or obtaining the nanostructured iron doped strontium titanate powder from the aqueous based reaction solution, wherein the plurality of precursors include strontium acetate, ferric isopropoxide, and titanium isopropoxide and the plurality of reagents include 2-methoxyethanol, acetic acid, and a triblock copolymer surfactant.

6. The method of claim 1, comprising forming or obtaining the nanostructured iron doped strontium titanate powder from the aqueous based reaction solution, wherein the plurality of precursors include strontium nitrate, titanium nitrate, and iron nitrate and the plurality of reagents include 2-methoxyethanol, sodium hydroxide, and a triblock copolymer surfactant.

7. The method of claim 1, comprising forming or obtaining the nanostructured iron doped strontium titanate powder from the aqueous based reaction solution, wherein the plurality of precursors include strontium acetate, titanium isopropoxide, and iron(III) acetate and the plurality of reagents include acetic acid, ethanol, and dimethylformamide.

8. The method of claim 1, comprising forming or obtaining the nanostructured iron doped strontium titanate powder from the aqueous based reaction solution, wherein the plurality of precursors include strontium nitrate, titanium isopropoxide, and iron(III) acetate and the plurality of reagents include ethanol, sodium hydroxide, and a triblock copolymer surfactant.

9. The method of claim 1, comprising forming or obtaining the nanostructured iron doped strontium titanate powder from the aqueous based reaction solution, wherein the plurality of precursors include strontium chloride, titanium tetrachloride, and iron(III) chloride and the plurality of reagents include sodium hydroxide and a triblock copolymer surfactant.

10. The method of any one of claims 1 through 9, comprising separating the nanostructured iron doped strontium titanate powder from the one of the alcohol based reaction solution and the aqueous reaction solution.

11. The method of claim 12, comprising washing the separated nanostructured iron doped strontium titanate powder in deionized water.

12. The method of any one of the claims 1 through 11, comprising forming an iron doped strontium titanate film with the nanostructured iron doped strontium titanate powder, including:
forming or obtaining a first mixture of water and glycerol;
combining the first mixture with a bicine solution to form a second mixture;
applying a first sonochemical treatment to the second mixture;
combining the second mixture with an amount of the iron doped strontium titanate nanostructured powder to form an iron doped strontium titanate laden-ink;
applying a second sonochemical treatment to the iron doped strontium titanate laden-ink; and
depositing the iron doped strontium titanate laden-ink onto a substrate to form the iron doped strontium titanate film.

## Patentansprüche

1. Verfahren, umfassend:
Bilden oder Erhalten eines nanostrukturierten eisendotierten Strontiumtitanatpulvers aus einer von einer Reaktionslösung auf Alkoholbasis und einer wässrigen Reaktionslösung, wobei das Bilden der Reaktionslösung auf Alkoholbasis und der wässrigen Reaktionslösung Kombinieren einer Vielzahl von Vorläufern und einer Vielzahl von Reagenzien umfasst, wobei die Vielzahl von Vorläufern ausgewählt ist aus Titanisopropoxid, Titannitrat, Titantetrachlorid, Strontiumacetat, Strontiumnitrat, Eisennitrat, Strontiumchlorid, Eisen(III)-isopropoxid, Eisennitratnonahydrat, Eisen(III)-chlorid, Eisen(III)-isopropoxid und Eisen(III)-acetat und die Vielzahl von Reagenzien ausgewählt ist aus Essigsäure, Natriumhydroxid, einem Triblockcopolymertensid, Milchsäure, 2-Methoxyethanol, Ethanol und Dimethylformamid; und
Anwenden einer sonochemischen Behandlung an einer von der Reaktionslösung auf Alkoholbasis und der wässrigen Reaktionslösung für eine Zeitdauer, wobei das Anwenden der sonochemischen Behandlung eine Hochintensitäts-Ultraschallstrahlung für wenigstens 2 Stunden umfasst.

2. Verfahren gemäß Anspruch 1, umfassend Bilden oder Erhalten des nanostrukturierten eisendotierten Strontiumtitanatpulvers aus der Reaktionslösung auf Alkoholbasis, wobei die Vielzahl von Vorläufern Titanisopropoxid, Eisenisopropoxid und Strontiumacetat umfasst und die Vielzahl von Reagenzien 2-Methoxyethanol, Essigsäure und ein Triblockcopolymertensid umfasst.

3. Verfahren gemäß Anspruch 1, umfassend Bilden oder Erhalten des nanostrukturierten eisendotierten Strontiumtitanatpulvers aus der Reaktionslösung auf wässriger Basis, wobei die Vielzahl von Vorläufern Strontiumnitrat, Eisennitratnonahydrat und Titanisopropoxid umfasst und die Vielzahl von Reagenzien Essigsäure, Natriumhydroxid und ein Triblockcopolymertensid umfasst.

4. Verfahren gemäß Anspruch 1, umfassend Bilden oder Erhalten des nanostrukturierten eisendotierten Strontiumtitanatpulvers aus der Reaktionslösung auf wässriger Basis, wobei die Vielzahl von Vorläufern Strontiumacetat, Eisennitratnonahydrat und Titanisopropoxid umfasst und die Vielzahl von Reagenzien Essigsäure, Milchsäure und ein Triblockcopolymertensid umfasst.

5. Verfahren gemäß Anspruch 1, umfassend Bilden oder Erhalten des nanostrukturierten eisendotierten Strontiumtitanatpulvers aus der Reaktionslösung auf wässriger Basis, wobei die Vielzahl von Vorläufern Strontiumacetat, Eisen(III)-isopropoxid und Titanisopropoxid umfasst und die Vielzahl von Reagenzien 2-Methoxyethanol, Essigsäure und ein Triblockcopolymertensid umfasst.

6. Verfahren gemäß Anspruch 1, umfassend Bilden oder Erhalten des nanostrukturierten eisendotierten Strontiumtitanatpulvers aus der Reaktionslösung auf wässriger Basis, wobei die Vielzahl von Vorläufern Strontiumnitrat, Titannitrat und Eisennitrat umfasst und die Vielzahl von Reagenzien 2-Methoxyethanol, Natriumhydroxid und ein Triblockcopolymertensid umfasst.

7. Verfahren gemäß Anspruch 1, umfassend Bilden oder Erhalten des nanostrukturierten eisendotierten Strontiumtitanatpulvers aus der Reaktionslösung auf wässriger Basis, wobei die Vielzahl von Vorläufern Strontiumacetat, Titanisopropoxid und Eisen(III)-acetat umfasst und die Vielzahl von Reagenzien Essigsäure, Ethanol und Dimethylformamid umfasst.

8. Verfahren gemäß Anspruch 1, umfassend Bilden oder Erhalten des nanostrukturierten eisendotierten Strontiumtitanatpulvers aus der Reaktionslösung auf wässriger Basis, wobei die Vielzahl von Vorläufern Strontiumnitrat, Titanisopropoxid und Eisen(III)-acetat umfasst und die Vielzahl von Reagenzien Ethanol, Natriumhydroxid und ein Triblockcopolymertensid umfasst.

9. Verfahren gemäß Anspruch 1, umfassend Bilden oder Erhalten des nanostrukturierten eisendotierten Strontiumtitanatpulvers aus der Reaktionslösung auf wässriger Basis, wobei die Vielzahl von Vorläufern Strontiumchlorid, Titantetrachlorid und Eisen(III)-chlorid umfasst und die Vielzahl von Reagenzien Natriumhydroxid und ein Triblockcopolymertensid umfasst.

10. Verfahren gemäß einem der Ansprüche 1 bis 9, umfassend Abtrennen des nanostrukturierten eisendotierten Strontiumtitanatpulvers aus der einen von der Reaktionslösung auf Alkoholbasis und der wässrigen Reaktionslösung.

11. Verfahren gemäß Anspruch 12, umfassend Waschen des abgetrennten nanostrukturierten eisendotierten Strontiumtitanatpulvers in entionisiertem Wasser.

12. Verfahren gemäß einem der Ansprüche 1 bis 11, umfassend Bilden eines eisendotierten Strontiumtitanatfilms mit dem nanostrukturierten eisendotierten Strontiumtitanatpulver, umfassend:
Bilden oder Erhalten eines ersten Gemischs von Wasser und Glycerol;
Kombinieren des ersten Gemischs mit einer Bicinlösung, um ein zweites Gemisch zu bilden;
Anwenden einer ersten sonochemischen Behandlung an dem zweiten Gemisch;
Kombinieren des zweiten Gemischs mit einer Menge des nanostrukturierten eisendotierten Strontiumtitanatpulvers, um eine mit eisendotiertem Strontiumtitanat beladene Tinte zu bilden;
Anwenden einer zweiten sonochemischen Behandlung an der mit eisendotiertem Strontiumtitanat beladenen Tinte; und
Aufbringen der mit eisendotiertem Strontiumtitanat beladenen Tinte auf ein Substrat, um den eisendotierten Strontiumtitanatfilm zu bilden.

## Revendications

1. Procédé, comprenant :
la formation ou l'obtention d'une poudre nanostructurée de titanate de strontium dopé au fer à partir de l'une parmi une solution de réaction à base d'alcool et une solution de réaction aqueuse, dans lequel la formation de la solution de réaction à base d'alcool et de la solution de réaction aqueuse comprend la combinaison d'une pluralité de précurseurs et d'une pluralité de réactifs, dans lequel la pluralité de précurseurs sont choisis parmi l'isopropoxyde de titane, le nitrate de titane, le tétrachlorure de titane, l'acétate de strontium, le nitrate de strontium, le nitrate de fer, le chlorure de strontium, l'isopropoxyde ferrique, le nitrate de fer nonahydraté, le chlorure de fer(III), l'isopropoxyde de fer(III) et l'acétate de fer(III) et la pluralité de réactifs sont choisis parmi l'acide acétique, l'hydroxyde de sodium, un tensioactif de copolymère tribloc, l'acide lactique, le 2-méthoxyéthanol, l'éthanol et le diméthylformamide ; et l'application d'un traitement sonochimique à l'une de la solution de réaction à base d'alcool et la solution de réaction aqueuse pendant une période, dans lequel l'application du traitement sonochimique comprend un rayonnement ultrasonore de haute intensité pendant au moins 2 heures.

2. Procédé de la revendication 1, comprenant la formation ou l'obtention de la poudre nanostructurée de titanate de strontium dopé au fer à partir de la solution de réaction à base d'alcool, dans lequel la pluralité de précurseurs comprennent l'isopropoxyde de titane, l'isopropoxyde de fer et l'acétate de strontium et la pluralité de réactifs comprennent le 2-méthoxyéthanol, l'acide acétique, et un tensioactif de copolymère tribloc.

3. Procédé de la revendication 1, comprenant la formation ou l'obtention de la poudre nanostructurée de titanate de strontium dopé au fer à partir de la solution de réaction à base d'eau, dans lequel la pluralité de précurseurs comprennent le nitrate de strontium, le nitrate de fer nonahydraté, et l'isopropoxyde de titane et la pluralité de réactifs comprennent l'acide acétique, l'hydroxyde de sodium et un tensioactif de copolymère tribloc.

4. Procédé de la revendication 1, comprenant la formation ou l'obtention de la poudre nanostructurée de titanate de strontium dopé au fer à partir de la solution de réaction à base d'eau, dans lequel la pluralité de précurseurs comprennent l'acétate de strontium, le nitrate de fer nonahydraté et l'isopropoxyde de titane et la pluralité de réactifs comprennent l'acide acétique, l'acide lactique et un tensioactif de copolymère tribloc.

5. Procédé de la revendication 1, comprenant la formation ou l'obtention de la poudre nanostructurée de titanate de strontium dopé au fer à partir de la solution de réaction à base d'eau, dans lequel la pluralité de précurseurs comprennent l'acétate de strontium, l'isopropoxyde ferrique et l'isopropoxyde de titane et la pluralité de réactifs comprennent le 2-méthoxyéthanol, l'acide acétique et un tensioactif de copolymère tribloc.

6. Procédé de la revendication 1, comprenant la formation ou l'obtention de la poudre nanostructurée de titanate de strontium dopé au fer à partir de la solution de réaction à base d'eau, dans lequel la pluralité de précurseurs comprennent le nitrate de strontium, le nitrate de titane et le nitrate de fer et la pluralité de réactifs comprennent le 2-méthoxyéthanol, l'hydroxyde de sodium et un tensioactif de copolymère tribloc.

7. Procédé de la revendication 1, comprenant la formation ou l'obtention de la poudre nanostructurée de titanate de strontium dopé au fer à partir de la solution de réaction à base d'eau, dans lequel la pluralité de précurseurs comprennent l'acétate de strontium, l'isopropoxyde de titane et l'acétate de fer(III) et la pluralité de réactifs comprennent l'acide acétique, l'éthanol, et le diméthylformamide.

8. Procédé de la revendication 1, comprenant la formation ou l'obtention de la poudre nanostructurée de titanate de strontium dopé au fer à partir de la solution de réaction à base d'eau, dans lequel la pluralité de précurseurs comprennent le nitrate de strontium, l'isopropoxyde de titane, et l'acétate de fer(III) et la pluralité de réactifs comprennent l'éthanol, l'hydroxyde de sodium et un tensioactif de copolymère tribloc.

9. Procédé de la revendication 1, comprenant la formation ou l'obtention de la poudre nanostructurée de titanate de strontium dopé au fer à partir de la solution de réaction à base d'eau, dans lequel la pluralité de précurseurs comprennent le chlorure de strontium, le tétrachlorure de titane et le chlorure de fer(III) et la pluralité de réactifs comprennent l'hydroxyde de sodium et un tensioactif de copolymère tribloc.

10. Procédé de l'une quelconque des revendications 1 à 9, comprenant la séparation de la poudre nanostructurée de titanate de strontium dopé au fer à partir de l'une de la solution de réaction à base d'alcool et de la solution de réaction aqueuse.

11. Procédé de la revendication 12, comprenant le lavage de la poudre nanostructurée de titanate de strontium dopé au fer séparée dans de l'eau déminéralisée.

12. Procédé de l'une quelconque des revendications 1 à 11, comprenant la formation d'un film de titanate de strontium dopé au fer avec la poudre nanostructurée de titanate de strontium dopé au fer, comprenant :
la formation ou l'obtention d'un premier mélange d'eau et de glycérol ;
la combinaison du premier mélange avec une solution de bicine pour former un deuxième mélange ;
l'application d'un premier traitement sonochimique au deuxième mélange ;
la combinaison du deuxième mélange avec une quantité de la poudre nanostructurée de titanate de strontium dopé au fer pour former une encre chargée en titanate de strontium dopé au fer ;
l'application d'un deuxième traitement sonochimique à l'encre chargée en titanate de strontium dopé au fer ; et
le dépôt de l'encre chargée en titanate de strontium dopé au fer sur un substrat pour former le film de titanate de strontium dopé au fer.
